# EUROPÄISCHE PATENTSCHRIFT

(11) **EP 2 453 392 B1**
(45) Veröffentlichungstag und Bekanntmachung des Hinweises auf die Patenterteilung: **09.01.2019**
(21) Anmeldenummer: 11187556.3
(22) Anmeldetag: 02.11.2011
(51) Int. Cl.: G06K 19/07

(54) **Verfahren zum Abgleich eines Empfangsschwingkreises eines Transponders in einem RFID-System**
Method for compensating for an oscillating receiver circuit of a transponder in an RFID system
Procédé d'égalisation d'un circuit de réception oscillant d'un transpondeur dans un système RFID

(30) Priorität: 16.11.2010 DE 102010043968
(43) Veröffentlichungstag der Anmeldung: 16.05.2012
(73) Patentinhaber: Aug. Winkhaus GmbH & Co. KG, 48291 Telgte (DE)
(72) Erfinder: Aswegen, Helmut, 48291 Telgte (DE)

(56) Entgegenhaltungen:
- EP-A1- 1 691 320
- EP-A2- 0 801 358

## Beschreibung

Die Erfindung betrifft ein Verfahren zum Abgleich eines Empfangsschwingkreises eines Transponders in einem RFID-System auf Resonanz zu der Frequenz eines von einem Lesegerät ausgesendeten Abfragesignals, wobei der Empfangsschwingkreis aus mindestens einer Induktivität und aus mindestens einer Kapazität besteht, wobei die Kapazität des Empfangsschwingkreises schrittweise durch Hinzu- oder Wegschalten einer Vielzahl von einzelnen Kapazitätswerten änderbar und schließlich so einstellbar ist, dass das vom Transponder empfangene Abfragesignal einen innerhalb des Änderungsbereichs maximalen Spannungswert annimmt, wobei in einem ersten Schritt als Startwert ein mittlerer oder vorgegebener Kapazitätswert ausgewählt wird, dieser Startwert im zweiten Schritt um einen Kapazitätswert geändert wird und wobei in Abhängigkeit von einer Steigerung oder Verringerung des sich im zweiten Schritt einstellenden Spannungswertes weitere Kapazitätswerte hinzu- oder weggeschaltet werden.

Passive Transponder, beispielsweise von Transponderschlüsseln einer Schließanlage, benötigen eine Aktivierungsenergie zur Abgabe ihres Codes. Diese Aktivierungsenergie wird von dem Empfangsschwingkreis bereitgestellt, welcher nach der Aktivierung des Transponders dessen Code ausliest. Die Bereitstellung der Aktivierungsenergie erfolgt mittels eines elektromagnetischen Feldes, in das der Transponder gehalten wird. Zur Anregung des Transponders wird ein hoher Spannungswert angestrebt. In verschiedenen Einsatzbedingungen des Empfangsschwingkreises wird das elektromagnetische Feld jedoch häufig von angrenzenden Bauteilen verstärkt, abgeschwächt, abgelenkt oder in der Frequenz verstimmt. Daher ist es erforderlich, den Empfangsschwingkreis abzugleichen, so dass das von dem Transponder empfangene Abfragesignal einen maximalen Spannungswert annimmt.

Ein Verfahren zum Betrieb eines Systems aus einer Basisstation und einem damit kontaktlos gekoppelten Transponder ist aus der EP 0 801 358 A2 bekannt. Das Verfahren ermöglicht eine Abstimmung des Schwingkreises des Transponders auf die Trägerfrequenz der Basisstation.

Aus der EP 1 691 320 A1 ist ein Verfahren zur Spannungsversorgung eines Transponders bekannt geworden. Der Transponder wird von einer Schaltungsanordnung mit elektrischem Strom versorgt.

Ein Verfahren zum Abgleich des Empfangsschwingkreises ist aus der EP 0 925 551 B1 bekannt. Bei diesem Verfahren werden alle Werte von eingesetzten Kondensatoren der Reihe nach geschaltet und ein Zählerstand beim maximalen Spannungswert festgehalten. Schließlich wird die Kondensatoransteuerung für diesen Zählerstand eingestellt. Nachteilig bei dem bekannten Verfahren ist jedoch, dass es wegen der Durchschaltung aller Werte der eingesetzten Kondensatoren sehr lange dauert und einen großen Anlagenaufwand erfordert.

Der Erfindung liegt das Problem zugrunde, ein Verfahren der eingangs genannten Art so weiter zu bilden, dass sich der Einsatz einer Vielzahl von einzelnen Kondensatoren vermeiden lässt.

Dieses Problem wird erfindungsgemäß dadurch gelöst, dass die Kapazitätswerte durch pulsförmiges Schalten einzelner Kapazitäten eingestellt werden.

Durch diese Gestaltung muss im ungünstigsten Fall nur die Hälfte der Kapazitäten durchgeschaltet werden, da das Verfahren mit einem mittleren oder vorgegebenen Kapazitätswert gestartet wird. Damit lässt sich der maximale Spannungswert besonders schnell ermitteln. Anstelle mit dem mittleren Kapazitätswert kann das Verfahren auch mit einem vorgegebenen Kapazitätswert gestartet werden, bei dem der maximale Spannungswert erwartet wird. Nach dem Abgleich kann die Kondensatoransteuerung für folgende Ansteuerungen mit dem Kapazitätswert erfolgen, für den der höchste Spannungswert ermittelt wurde. Alternativ dazu kann der Kapazitätswert, für den der höchste Spannungswert ermittelt wurde, auch für folgende Abgleiche als vorgegebener Kapazitätswert eingestellt werden. Der Einsatz einer Vielzahl von einzelnen Kondensatoren lässt sich einfach vermeiden, weil die Kapazitätswerte durch pulsförmiges Schalten einzelner Kapazitäten eingestellt werden. Durch diese Gestaltung weist eine Vorrichtung zur Durchführung des Verfahrens eine besonders geringe Anzahl an Bauteilen auf.

Das erfindungsgemäße Verfahren gestaltet sich gemäß einer vorteilhaften Weiterbildung der Erfindung besonders einfach, wenn der Kapazitätswert des zweiten Schrittes größer oder kleiner ist als der Kapazitätswert des ersten Schritts und wenn bei einer Steigerung des Spannungswertes von dem ersten Schritt zu dem zweiten Schritt in einem dritten Schritt der Kapazitätswert weiter gesteigert oder verringert wird.

Das erfindungsgemäße Verfahren gestaltet sich gemäß einer vorteilhaften Weiterbildung der Erfindung besonders einfach, wenn der Kapazitätswert des zweiten Schrittes größer oder kleiner ist als der Kapazitätswert des ersten Schritts und wenn bei einer Verringerung des Spannungswertes von dem ersten Schritt zu dem zweiten Schritt in einem dritten Schritt der Kapazitätswert gegenüber dem ersten Schritt verringert oder gesteigert wird.

Der bauliche Aufwand für die pulsförmige Schaltung der einzelnen Kapazitäten lässt sich gemäß einer anderen vorteilhaften Weiterbildung der Erfindung besonders gering halten, wenn ein Pulsweitenmodulator zwei Kapazitäten gegen ein Grundpotential pulsförmig schaltet. Hierdurch erfolgt proportional zur Pulsweite ein Ladungsrückfluss aus den Kapazitäten in den Antennenkreis. Die Resonanzfrequenz verringert sich durch die zusätzlich wirkende Teilkapazität. Der Pulsweitenmodulator stellt damit über einen Regelkreis die Pulsweite ein, die eine maximale Spannung an dem Empfangsschwingkreis bewirkt. Vorteilhaft ist bei dieser Gestaltung die geringe Anzahl an notwendigen Bauteilen im Vergleich zu einer Kaskade aus Kapazitäten und elektronischen Schaltern.

Der bauliche Aufwand zur Hinzu- oder Wegschaltung der Kapazitätswerte lässt sich gemäß einer anderen vorteilhaften Weiterbildung der Erfindung besonders gering halten, wenn ein Regelkreis zur Hinzu- oder Wegschaltung der Kapazitätswerte von einer Hilfseinrichtung mit elektrischem Strom versorgt wird. Hierdurch können die Kapazitätswerte selbständig hinzu oder weggeschaltet werden, indem der Regelkreis mit den Kapazitäten und dem Empfangsschwingkreis einen Resonanzkreis bildet. Dabei verschiebt sich die Resonanzlage um einen von den Kapazitätswerten festgelegten Wert. Die Anregung des Resonanzkreises erfolgt deutlich näher zur Resonanzfrequenz. Es lassen sich Kapazitätswerte zu- oder abschalten, bis eine Verringerung der Spannung detektiert wird. Die selbständige Zuschaltung kann beispielsweise durch selbstleitende MOS-Transistoren erfolgen.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: eine Schaltung mit einem Empfangsschwingkreis und mit einer Kaskade von mehreren schaltbaren Kapazitäten,
- Fig. 2: eine Schaltung mit einem Empfangsschwingkreis, mit einem Regelkreis zum selbständigen Schalten von Kapazitäten,
- Fig. 3: als Ausführungsbeispiel der Erfindung eine Schaltung mit einem Empfangsschwingkreis, mit einem Pulsweitenmodulator zum pulsförmigen Schalten von Kapazitäten,
- Fig. 4: eine Kurvenschar von Resonanzkurven aus einer Messreihe,
- Fig. 5: ein Flussdiagramm zum Abgleich der Empfangsschwingkreise aus den Figuren 1 bis 3.

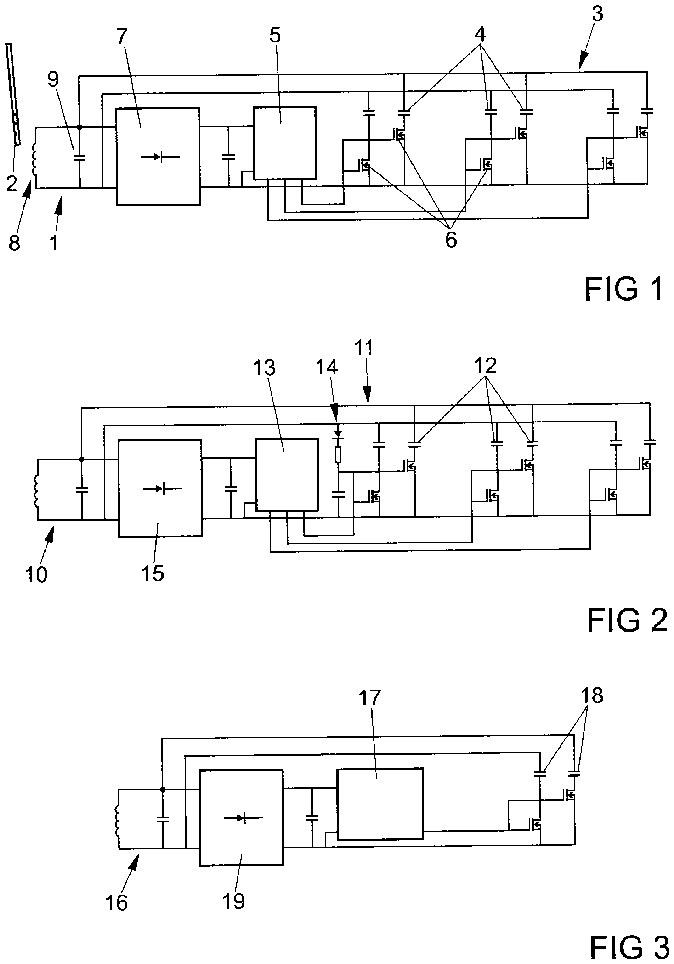

Figur 1 zeigt eine Schaltung mit einem Empfangsschwingkreis 1 eines Transponders. Der Empfangsschwingkreis 1 ist mit einer Kaskade 3 von schaltbaren Kapazitäten 4 verbunden. Die Kapazitäten 4 und damit die Kapazitätswerte werden von einem Regelkreis 5, welcher einzelne Transistoren 6 ansteuert, hinzu- oder weggeschaltet. Zwischen dem Regelkreis 5 und dem Empfangsschwingkreis 1 ist zudem ein verlustarmer Gleichrichter 7 angeordnet. Der Empfangsschwingkreis 1 setzt sich aus einer als Antenne dienenden Induktivität 8 und einer Kapazität 9 zusammen.

Figur 2 zeigt eine Schaltung mit einem wie in Figur 1 aufgebauten Empfangsschwingkreis 10, mit einer Kaskade 11 von schaltbaren Kapazitäten 12 und mit einem Regelkreis 13. Im Unterschied zu der in Figur 1 dargestellten Schaltung hat diese Schaltung eine Hilfseinrichtung 14 zur Bereitstellung einer Hilfsspannung. Der Regelkreis 13 schaltet die einzelnen Kapazitäten 12 und damit die Kapazitätswerte selbständig zu oder weg. Die Schaltung hat ebenfalls einen verlustarmen Gleichrichter 15.

Figur 3 zeigt als Ausführungsbeispiel der Erfindung eine Schaltung mit einem wie in Figur 1 aufgebauten Empfangsschwingkreis 16 und mit einem Pulsweitenmodulator 17 zum getakteten Ansteuern von Kapazitäten 18. Durch das getaktete Ansteuern der Kapazitäten 18 lassen sich unterschiedliche effektive Kapazitätswerte erzeugen. Wie bei den Schaltungen aus den Figuren 1 und 2 ist auch hier ein verlustarmer Gleichrichter 19 vor dem Empfangsschwingkreis 16 eingesetzt.

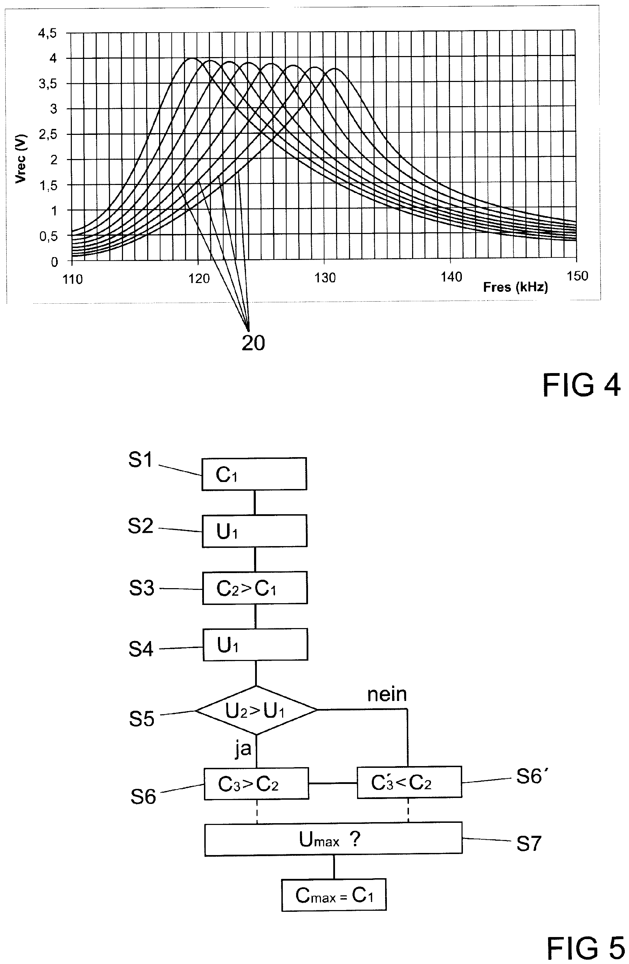

Figur 4 zeigt eine Kurvenschar von mehreren Resonanzkurven 20 der Empfangsschwingkreise 1, 10, 16 aus den Figuren 1 bis 3 bei verschiedenen Bedingungen. Hierbei ist zu erkennen, dass die Resonanzkurven 20 bei verschieden geschalteten Kapazitätswerten unterschiedliche maximale Spannungswerte aufweisen. Die Regelkreise 5, 13 der Schaltungen aus den Figuren 1 und 2 sowie der Pulsweitenmodulator 17 der Schaltung aus Figur 3 dienen dazu, den höchsten Spannungswert auszuwählen.

Figur 5 zeigt ein Flussdiagramm zum Zu- oder Wegschalten der Kapazitätswerte aus den Figuren 1 bis 3. Hierzu wird im ersten Schritt S1 zunächst ein mittlerer oder vorgegebener Kapazitätswert als Startwert geschaltet und im zweiten Schritt S2 der sich ergebende Spannungswert ermittelt. Im Schritt S3 wird beispielhaft der Kapazitätswert des Schrittes S1 erhöht und im vierten Schritt S4 erneut der sich ergebende Spannungswert ermittelt. Ergibt im Schritt S5 ein Vergleich, dass der Spannungswert des Schrittes S4 größer ist als der des Schrittes S2, wird in einem Schritt S6 der Kapazitätswert schrittweise weiter erhöht, bis in einem Schritt S7 keine Steigerung des ermittelten Spannungswertes mehr erreicht wird. Der dem maximal erreichbaren Spannungswert entsprechende Kapazitätswert wird im Schritt S8 abgespeichert und kann bei einem Neustart des Programms als Startwert eingesetzt werden. Ergibt der Vergleich aus Schritt S5, dass der Spannungswert des Schrittes S4 kleiner ist als der des Schrittes S2, wird im Schritt S6' der Kapazitätswert schrittweise verringert, bis in dem Schritt S7 keine Steigerung des ermittelten Spannungswertes erreicht wird. Selbstverständlich kann in Umkehr des Programmablaufs im Schritt S3 der Kapazitätswert auch verringert werden.

## Patentansprüche

1. Verfahren zum Abgleich eines Empfangsschwingkreises (1, 10, 16) eines Transponders (2) in einem RFID-System auf Resonanz zu der Frequenz eines von einem Lesegerät ausgesendeten Abfragesignals, wobei der Empfangsschwingkreis (1, 10, 16) aus mindestens einer Induktivität (8) und aus mindestens einer Kapazität (9) besteht, wobei die Kapazität (9) des Empfangsschwingkreises (1, 10, 16) schrittweise durch Hinzu- oder Wegschalten einer Vielzahl von einzelnen Kapazitätswerten änderbar und schließlich so einstellbar ist, dass das vom Transponder (2) empfangene Abfragesignal einen innerhalb des Änderungsbereichs maximalen Spannungswert annimmt, wobei in einem ersten Schritt als Startwert ein mittlerer oder vorgegebener Kapazitätswert ausgewählt wird, dieser Startwert im zweiten Schritt um einen Kapazitätswert geändert wird und wobei in Abhängigkeit von einer Steigerung oder Verringerung des sich im zweiten Schritt einstellenden Spannungswertes weitere Kapazitätswerte hinzu- oder weggeschaltet werden, **dadurch gekennzeichnet, dass** die Kapazitätswerte durch pulsförmiges Schalten einzelner Kapazitäten (18) eingestellt werden, wobei durch getaktetes Ansteuern der Kapazitäten (18) sich unterschiedliche effektive Kapazitätswerte erzeugen lassen.

2. Verfahren nach Anspruch 1, **dadurch gekennzeichnet, dass** der Kapazitätswert des zweiten Schrittes größer oder kleiner ist als der Kapazitätswert des ersten Schritts und dass bei einer Steigerung des Spannungswertes von dem ersten Schritt zu dem zweiten Schritt in einem dritten Schritt der Kapazitätswert weiter gesteigert oder verringert wird.

3. Verfahren nach Anspruch 1, **dadurch gekennzeichnet, dass** der Kapazitätswert des zweiten Schrittes größer oder kleiner ist als der Kapazitätswert des ersten Schritts und dass bei einer Verringerung des Spannungswertes von dem ersten Schritt zu dem zweiten Schritt in einem dritten Schritt der Kapazitätswert gegenüber dem ersten Schritt verringert oder gesteigert wird.

4. Verfahren nach Anspruch 1, **dadurch gekennzeichnet, dass** ein Pulsweitenmodulator (17) zwei Kapazitäten (4, 12, 18) gegen ein Grundpotential pulsförmig schaltet.

5. Verfahren nach einem der vorhergehenden Ansprüche, **dadurch gekennzeichnet, dass** ein Regelkreis zur Hinzu- oder Wegschaltung der Kapazitätswerte von einer Hilfseinrichtung mit elektrischem Strom versorgt wird.

## Claims

1. A method for tuning of an oscillating receiver circuit (1, 10, 16) of a transponder (2) built into a RFID system to resonance to the frequency of an inquiry signal transmitted by a reading device, wherein the oscillating receiver circuit (1, 10, 16) consists at least of one inductance (8) and at least one capacitance (9), wherein the capacitance (9) of the oscillating receiver circuit (1, 10, 16) can be changed step-wise by adding or removing a plurality of individual capacitance values and finally can be set such that the inquiry signal received from the transponder (2) assumes a maximum voltage value within the range of change, wherein in a first step a mean or predetermined capacitance value is selected as a starting value, this starting value is changed in the second step by a capacitance value and wherein depending on an increase or reduction of the voltage value which is set in the second step further capacitance values are added or removed, **characterized in that** the capacitance values are set by pulse-shaped switching of individual capacitances (18), wherein different effective capacitance values can be generated by clocked control of the capacitances (18).

2. A method according to Claim 1, **characterized in that** the capacitance value of the second step is greater or smaller than the capacitance value of the first step and that in the case of an increase of the voltage value from the first step to the second step the capacitance value is further increased or reduced in a third step.

3. A method according to Claim 1, **characterized in that** the capacitance value of the second step is greater or smaller than the capacitance value of the first step and that in the case of a reduction of the voltage value from the first step to the second step the capacitance value is reduced or increased in the third step relative to the first step.

4. A method according to Claim 1, **characterized in that** a pulse width modulator (17) switches two capacitances (4, 12, 18) in a pulse-shaped manner against ground potential.

5. A method according to any one of the preceding claims, **characterized in that** a control circuit for adding or removing capacitance values is supplied with electrical current by an auxiliary device.

## Revendications

1. Procédé d'ajustement d'un circuit résonnant de réception (1, 10, 16) d'un transpondeur (2) dans un système RFID à la résonance à la fréquence d'un signal de requête émis par un appareil de lecture, le circuit résonnant de réception (1, 10, 16) étant constitué d'au moins une inductance (8) et d'au moins un condensateur (9), le condensateur (9) du circuit résonnant de réception (1, 10, 16) étant variable par étapes par ajout ou retrait d'une pluralité de valeurs de capacité et enfin réglable de façon à ce que le signal de requête reçu par le transpondeur (2) adopte une valeur de tension à l'intérieur de la plage de variation, une valeur de capacité moyenne ou prédéterminée étant sélectionnée, dans une première étape, en tant que valeur initiale, cette valeur initiale étant modifiée, dans la deuxième étape, d'une valeur de capacité et, en fonction d'une augmentation ou d'une diminution de la valeur de tension réglée dans la deuxième étape, des valeurs de capacité supplémentaires étant ajoutées ou retirées, **caractérisé en ce que** les valeurs de capacité sont réglées par une commutation par impulsions de différents condensateurs (18), un contrôle cadencé des condensateurs (18) permettant de générer des valeurs différentes valeurs de capacité effectives.

2. Procédé selon la revendication 1, **caractérisé en ce que** la valeur de capacité de la deuxième étape est supérieure ou inférieure à la valeur de capacité de la première étape et **en ce que**, dans le cas d'une augmentation de la valeur de tension de la première étape à la deuxième étape, la valeur de capacité est encore augmentée ou diminuée dans une troisième étape.

3. Procédé selon la revendication 1, **caractérisé en ce que** la valeur de capacité de la deuxième étape est supérieure ou inférieure à la valeur de capacité de la première étape et **en ce que**, dans le cas d'une diminution de la valeur de tension de la première étape à la deuxième étape, la valeur de capacité est encore augmentée ou diminuée, par rapport à la première étape, dans une troisième étape.

4. Procédé selon la revendication 1, **caractérisé en ce qu'un** modulateur de largeur d'impulsions (17) commute par impulsions deux condensateurs (4, 12, 18) par rapport à un potentiel de masse.

5. Procédé selon l'une des revendications précédentes, **caractérisé en ce qu'un** circuit de régulation est alimenté en courant électrique par un dispositif auxiliaire pour l'ajout ou le retrait des valeurs de capacité.
